# EUROPEAN PATENT SPECIFICATION

(11) **EP 0 415 737 B1**
(45) Date of publication and mention of the grant of the patent: **29.10.1997**
(21) Application number: 90309441.5
(22) Date of filing: 29.08.1990
(51) Int. Cl.: G06T 7/20, H04N 7/36

(54) **Motion detecting circuits for video images**
Bewegungsauffindungsschaltungen für Videobilder
Circuits de détection de mouvement pour images vidéo

(30) Priority: 29.08.1989 JP 222395/89
(43) Date of publication of application: 06.03.1991
(73) Proprietor: SONY CORPORATION, Tokyo 141 (JP)
(72) Inventor: Kitazato, Naohisa, c/o Patents Division, Shinagawa-ku Tokyo 141 (JP)
(74) Representative: Cotter, Ivan John

(56) References cited:
- EP-A- 0 210 861
- EP-A- 0 276 434

## Description

This invention relates to motion detecting circuits for video images.

One approach to high efficiency coding of a television signal is to use predictive coding. One form of predictive coding involves prediction of movement between adjacent frames, for which purpose it is necessary accurately to derive motion vectors using a motion detecting circuit. The motion detecting circuit separates each frame of the video image into a predetermined number of image blocks, and a motion vector is detected for each image block. This involves processing a large amount of data. Therefore, for coding a television signal in a range of several Mbps to several tens of Mbps, high speed and high efficiency data processing becomes necessary.

EP-A-0 329 151 discloses digital signal processing apparatus for coding image signals and employing motion compensative processing. An image frame is divided into small areas and a signal processing module is assigned to each of the image areas. In a signal processing module, data of the assigned area in a current frame is stored in an input dual memory, and data of the assigned area in an already coded previous frame is stored in another input dual memory. Data output from the dual memories is supplied to a pipeline arithmetic unit which performs coding and local decoding processes, and the coded and local decoded outputs are supplied to respective FIFO memories.

According to the present invention there is provided a motion detecting circuit for a video image, the circuit comprising:
a first buffer memory for storing current image picture data separated into a plurality of first component data representative of current image regions;
a second buffer memory for storing previous image picture data separated into a plurality of second component data representative of previous image regions;
a plurality of arithmetic means for deriving motion vectors, each of said arithmetic means receiving the first component data and corresponding second component data for deriving the motion vectors; a multiplexer connected to outputs of the plurality of arithmetic means; and
an output buffer memory connected to said multiplexer;
   wherein said first buffer memory, second buffer memory and output buffer memory are each divided into two memory areas, data write and read operations for both memory areas being controlled independently of one another.

In a preferred embodiment each of the arithmetic means comprises an absolute differential value calculating means, an accumulating circuit and a minimum value detecting circuit. Also, it is preferred that the first buffer memory stores current frame image data and the second buffer memory stores one frame delayed image data.

The motion detecting circuit may further comprise a first address change-over circuit connected to the first and second buffer memories, and a second address change-over circuit connected to the output buffer memory.

The motion detecting circuit may also comprise a controller connected to the first and second change-over circuits, the controller being supplied with a video signal synchronization signal.

The invention will now be described by way of example with reference to the accompanying drawings, throughout which like parts are referred to by like references, and in which:
Figure 1 is a block diagram of an embodiment of motion detecting circuit according to the present invention;
Figure 2 is an explanatory illustration showing video image regions for which motion vectors are detected;
Figure 3 is a table showing the relationship between an input side buffer and a memory bank; and
Figure 4 is a layout of motion vectors generated by the motion detecting circuit.

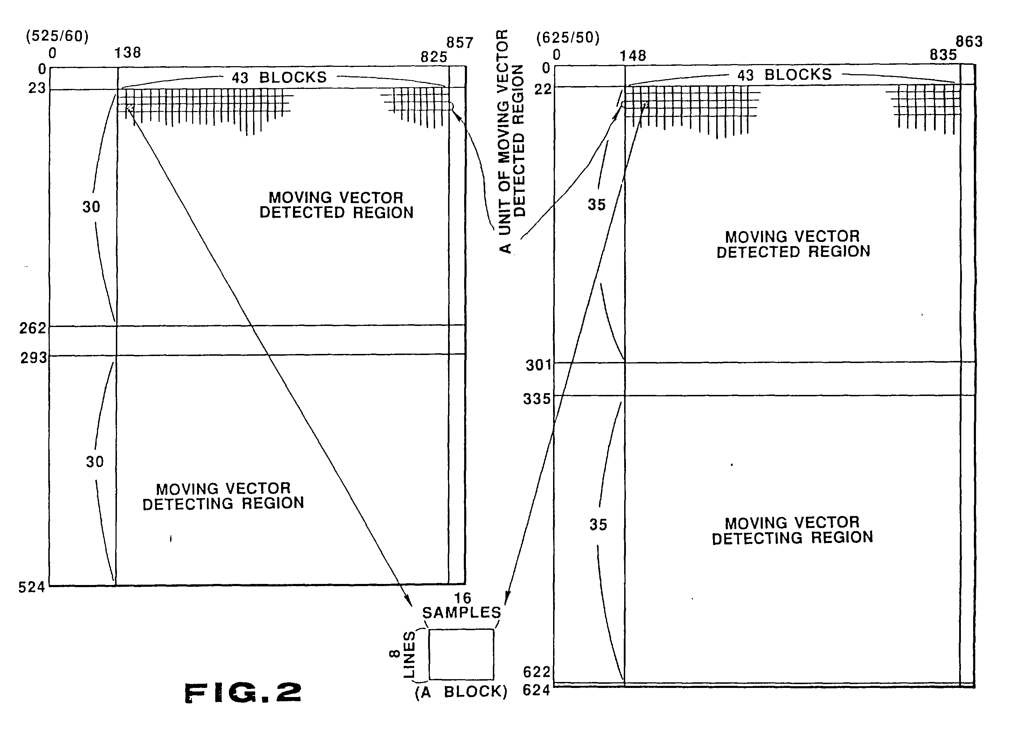

Figure 2 shows regions for which motion vectors are to be detected. On the left and right, respectively, are shown motion vector detecting regions in 60 Hz video images having 525 horizontal scanning lines, and 50 Hz video images having 625 horizontal scanning lines. In either case, each eight scanning lines of the video data forms one unit processing region. Therefore, each field has 30 or 35 unit processing regions. Each unit processing region is separated every sixteen pixels to form unit blocks. Therefore, in each unit processing region, 43 unit blocks are formed.

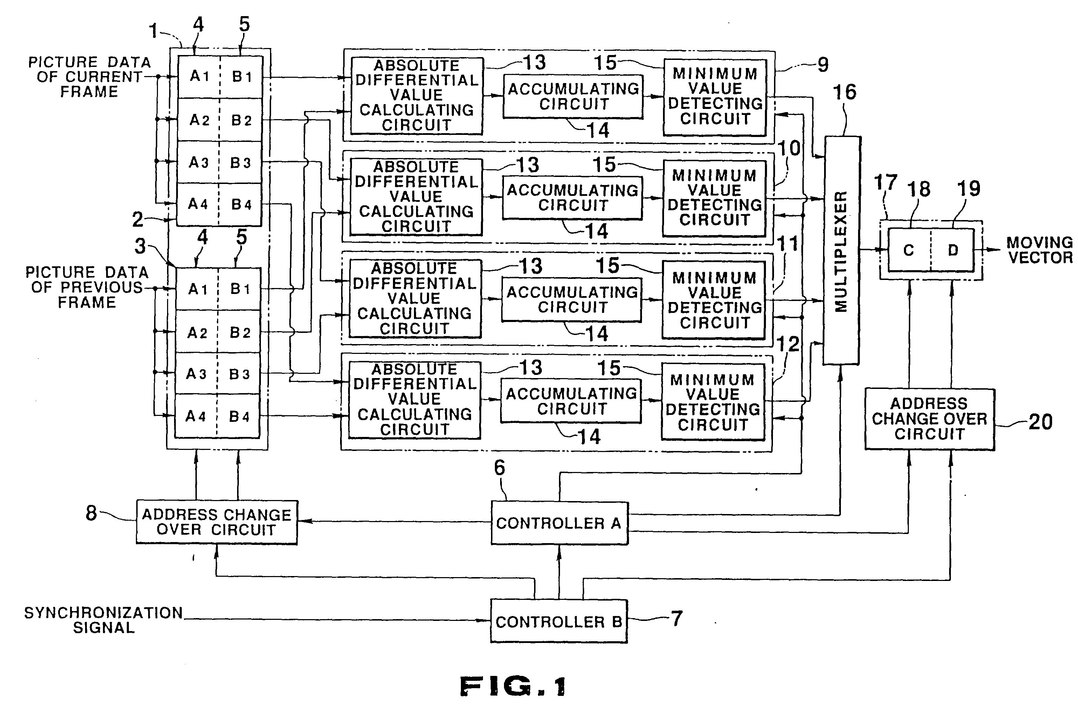

Referring to Figure 1, the motion detecting circuit has an input side buffer 1 to which current frame picture data and one frame delayed picture data are supplied. The input side buffer 1 has a memory block 2 for storing current frame picture data and a memory block 3 for storing one frame delayed picture data. Therefore, the current frame picture data are supplied to the memory block 2 and the one frame delayed picture data are supplied to the memory block 3. Each of the memory blocks 2 and 3 is separated into two memory areas 4 and 5, which will be hereafter referred as the A memory area and the B memory area. Writing and reading data in and from the A and B memory areas 4 and 5 can be controlled independently of each other. Each memory area 4 and 5 has four memory banks A1 to A4 and B1 to B4, respectively.

Writing of data in the memory banks A1 to A4 and B1 to B4 is controlled by the controller 7 which will be referred to as the B controller 7. The B controller 7 produces a writing control signal for controlling write timing in the memory banks A1 to A4 and B1 to B4.

Reading of data from the memory banks A1 to A4 and B1 to B4 is controlled by a controller 6 which will be referred to as the A controller 6. The A controller 6 supplies the reading control signal.

The writing and reading control signals are fed to an address change-over circuit 8 which selectively feeds the writing and reading control signals to the memory banks A1 to A4 and B1 to B4. The address change-over circuit 8 operates in such a manner that when the reading control signal is fed to the A memory banks A1 to A4 for operating in read mode, the writing control signal is supplied to the B memory banks B1 to B4 for operating in write mode, whereby the picture data read out from the A memory banks are written in the B memory banks. In the alternative, while the A memory banks receive the write control signal to operate in write mode, the reading control signal is fed to the B memory banks for operating in read mode. Therefore, while the A memory banks are updated by newly input picture data, picture data are read from the B memory banks. The address change-over circuit 8 is controlled by a switching control signal supplied from the B controller 7. The B controller 7 supplies the switching control signal at every eight horizontal scanning lines. Accordingly, the operation mode is switched between the write mode and the read mode at every unit processing region.

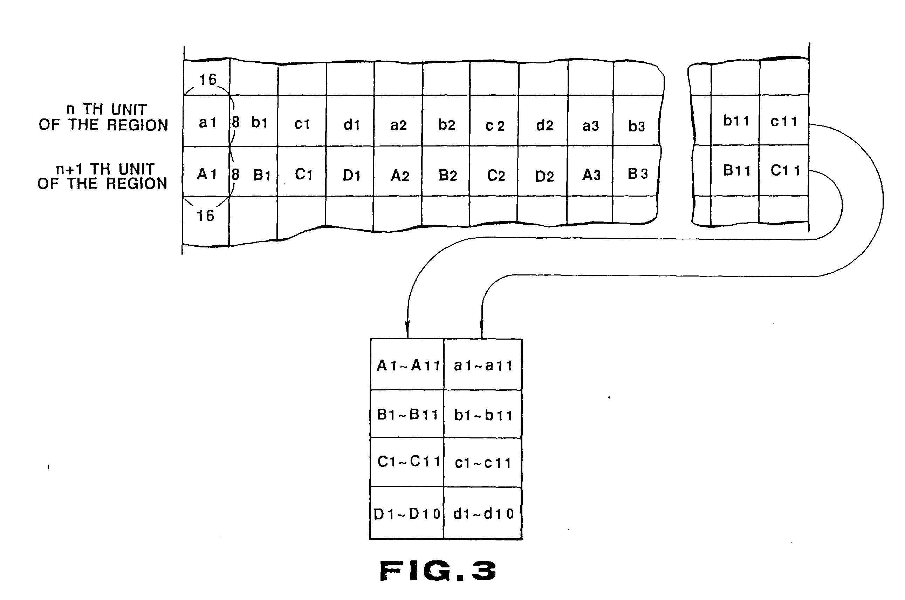

For the B controller 7, a synchronization signal is supplied, and the B controller 7 is responsive to the synchronization signal to derive a writing address from a ROM. As seen from Figure 3, the writing addresses are set for storing picture data of respective unit blocks in randomly selected unit processing regions in the A and B memory banks in order. On the other hand, the A controller 6 derives a reading address from a ROM. The reading address is set in such a manner that pixel data at reference points (32 points) of the current frame picture data and the pixel data of the corresponding reference points of the one frame delayed picture data can be read out. Therefore, in this embodiment, thirty variations of picture data can be read out.

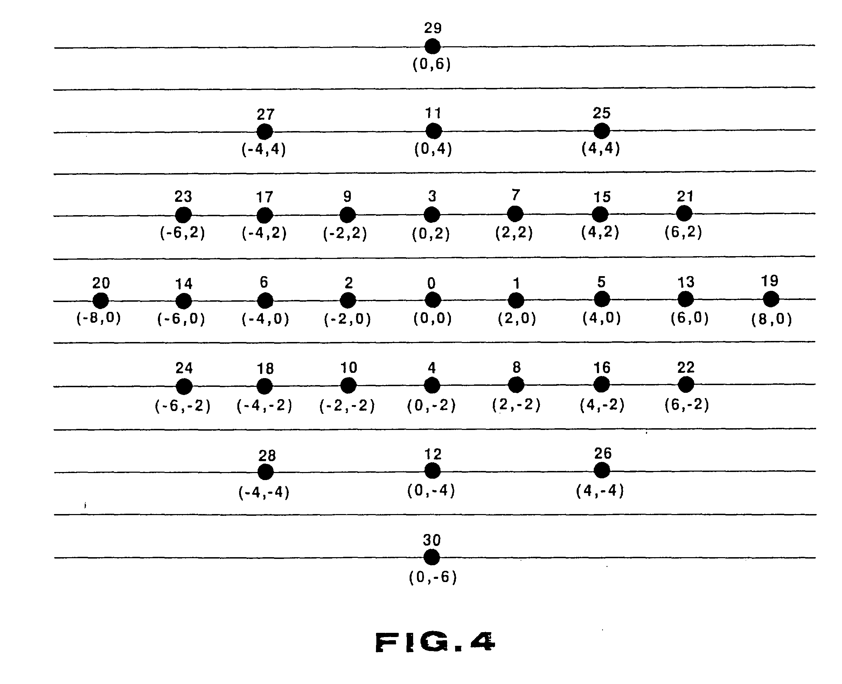

Figure 4 shows the layout of motion vectors set in relation to the centre point 0 (0, 0). By this, the one frame delayed picture data with offset relative to the current frame picture data of a magnitude corresponding to the motion vectors between the corresponding reference points can be read out. The picture data in the memory banks A1 to A4 and B1 to B4 of the memory blocks 2 and 3 are read out and fed to four arithmetic stages 9, 10, 11 and 12. Each of the arithmetic stages 9 to 12 performs an arithmetic operation for deriving the motion vectors by block matching. Each of the four arithmetic stages 9 to 12 comprises an absolute differential value calculating circuit 13, an accumulating circuit 14 and a minimum value detecting circuit 15. The absolute differential value calculating circuit 13 performs the following process for deriving the motion vector.

Assuming that the coordinates of the reference point (32 points/unit block) in No. f field is If(xk, yk), and the motion vector value is expressed by (dxl, dyl), the absolute differential value | dk | is derived by the following equation:$\text{dk | If(xk, yk) | - | If-2(xk - dkl, yk - dyl) |} \text{(1 ≤ i ≤ 30)}$

The absolute differential value calculating circuit 13 supplies the absolute differential value | dk | to the accumulating circuit 14 which derives a sum S1 by integrating the absolute differential value. Then, the accumulating circuit 14 feeds the sum data S1 to the minimum value detecting circuit 15 which selects the sum data S1 having the minimum value for detecting the minimum motion vector (Ve = MIN(S1)). The minimum value detecting circuit 15 derives code data which are illustrated by dots in Figure 4 in a form of 5-bits digital data. Processing in the arithmetic stages 9 to 12 is controlled by a clock signal generated by the A controller 6.

The output of respective minimum value detecting circuits 15 of the arithmetic stages 9 to 12 are fed to a multiplexer 16. The multiplexer 16 receives a switching signal from the A controller 6 for selecting one of the inputs from the arithmetic stages 9 to 12 to feed to an output side buffer 17.

The output side buffer 17 has memory areas 18 and 19 respectively referred to as the C memory area and the D memory area which can be controlled independently. Writing for the C and D memory areas 18 and 19 is controlled by a writing control signal the A controller 6, and reading of the data in the C and D memory areas is controlled by the reading control signal from the B controller 7. The writing control signal of the A controller 6 and the reading control signal of the B controller 7 are fed to an address change-over circuit 20. The address change-over circuit 20 selectively feeds the writing and reading controls signals to the C and D memory areas 18 and 19. Similarly to the address change-over circuit 8, the address change-over circuit 20 is so designed as to feed a writing control signal to one of the C and D memory areas 18 and 19 and to feed a reading control signal to the other. The address change-over circuit 20 is controlled by a switching signal from the B controller 7. The timing of the switching signal fed to the address change-over circuit 20 is synchronized with the switching signal for the address change-over circuit 8 from the A controller 6. The switching control signal for the address change-over circuit 20 is generated every eight horizontal lines. Therefore, for the memory area active in the write mode, the motion vector data for eight horizontal scanning lines forming one unit processing region, can be written. On the other hand, the motion vector data stored in the memory area active in read mode, are read out in synchronism with the read timing of the corresponding picture data.

The motion vector data has a delay of sixteen horizontal scanning lines relative to the current frame picture data. Therefore, the television signal is delayed by sixteen horizontal scanning lines, so that the television signal synchronizes with the motion vector data.

The operation of this motion detecting circuit will now be further described.

The current frame picture data and the one frame delayed picture data are synchronously supplied to the input side buffer 1. Assuming that picture data in the No. n unit processing region becomes as illustrated in Figure 3 and are written in the B memory area 5, the picture data in the No. n+1 unit processing region are written in the A memory area 4. By repeatedly writing picture data of each unit processing region in order, all picture data are written in the input side buffer 1.

While the picture data of No. n+1 unit processing region are written in, the picture data of No. n unit processing region in the B memory area 5 are read out to the arithmetic stages 9 to 12. In this way the motion vector of each unit processing region is derived. Then, the motion data thus derived by the arithmetic stages 9 to 12 are fed to the D memory area 19 of the output side buffer 17. Subsequently, the picture data of No. n+2 unit processing region are written in the B memory area 5. During the writing period of the picture data of No. n+2 unit processing region, the picture data of the No. n+1 unit processing region are read out and fed to the arithmetic stages 9 to 12, and the motion vector data derived with respect thereto are fed to the C memory area 18 of the output side buffer 17. During the period in which the motion vector data of No. n+1 unit process region are written in the C memory area 18, the motion vector data of No. n unit process region stored in the D memory area 19 are read out in synchronism with the television signal delayed by sixteen horizontal lines. Therefore the motion vector is derived every sixteen horizontal scanning lines.

In this embodiment, since the four arithmetic stages 9 to 12 operate in parallel to each other for deriving the motion vector, the required processing speed for deriving the motion vector is reduced to one fourth. As can be appreciated, the number of the arithmetic stages is not limited to four, but can be selected according to the processing speed of the TTL circuits to be employed.

## Claims

1. A motion detecting circuit for a video image, the circuit comprising:
a first buffer memory (2) for storing current image picture data separated into a plurality of first component data representative of current image regions;
a second buffer memory (3) for storing previous image picture data separated into a plurality of second component data representative of previous image regions;
a plurality of arithmetic means (9 to 12) for deriving motion vectors, each of said arithmetic means (9 to 12) receiving the first component data and corresponding second component data for deriving the motion vectors;
a multiplexer (16) connected to outputs of the plurality of arithmetic means (9 to 12); and
an output buffer memory (17) connected to said multiplexer (16);
wherein said first buffer memory (2), second buffer memory (3) and output buffer memory (17) are each divided into two memory areas (4, 5, 18, 19), data write and read operations for both memory areas being controlled independently of one another.

2. A circuit according to claim 1 wherein each of said arithmetic means (9 to 12) comprises an absolute differential value calculating means (13), an accumulating circuit (14) and a minimum value detecting circuit (15).

3. A circuit according to claim 1 wherein said first buffer memory (2) stores current frame image data and said second buffer memory (3) stores one frame delayed image data.

4. A circuit according to any preceding claim which further comprises a first address change-over circuit (8) connected to said first and second buffer memories (2, 3), and a second address change-over circuit (20) connected to said output buffer memory (17).

5. A circuit according to claim 4 which further comprises a controller (7) connected to said first and second change-over circuits (8, 20).

6. A circuit according to claim 5 wherein said controller (7) is supplied with a video signal synchronization signal.

## Patentansprüche

1. Schaltungsanordnung zur Bewegungserkennung bezüglich eines Videobildes, umfassend:
einen ersten Pufferspeicher (2) zur Speicherung gegenwärtiger Bilddaten, die in eine Vielzahl von ersten Komponentendaten aufgeteilt sind, welche für gegenwärtige Bildbereiche repräsentativ sind;
einen zweiten Pufferspeicher (3) zur Speicherung vorhergehender Bilddaten, die in eine Vielzahl von zweiten Komponentendaten aufgeteilt sind, welche für vorhergehende Bildbereiche repräsentativ sind;
eine Vielzahl von Recheneinrichtungen (9 bis 12) zur Ableitung von Bewegungsvektoren,
wobei jede der genannten Recheneinrichtungen (9 bis 12) zur Ableitung der Bewegungsvektoren die ersten Komponentendaten und entsprechende zweite Komponentendaten aufnimmt;
einen Multiplexer (16), der an Ausgängen der Vielzahl von Recheneinrichtungen (9 bis 12) angeschlossen ist;
und einen Ausgangspufferspeicher (17), der mit dem genannten Multiplexer (16) verbunden ist,
wobei der genannte erste Pufferspeicher (2), der zweite Pufferspeicher (3) und der Ausgangspufferspeicher (17) jeweils in zwei Speicherbereiche (4, 5, 18, 19) unterteilt sind und wobei Datenschreib- und Datenlesevorgänge für beide Speicherbereiche unabhängig voneinander gesteuert werden.

2. Schaltungsanordnung nach Anspruch 1, wobei jede der genannten Recheneinrichtungen (9 bis 12) eine Absolut-Differenzwert-Recheneinrichtung (13), eine Akkumulierschaltung (14) und eine Minimalwert-Erkennungsschaltung (15) umfaßt.

3. Schaltungsanordnung nach Anspruch 1, wobei der genannte erste Pufferspeicher (2) gegenwärtige Vollbilddaten speichert und wobei der genannte zweite Pufferspeicher (3) um ein Vollbild verzögerte Bilddaten speichert.

4. Schaltungsanordnung nach irgendeinem vorhergehenden Anspruch, umfassend ferner eine erste Adressenwechselschaltung (8), die mit den genannten ersten und zweiten Pufferspeichern (2, 3) verbunden ist, und eine zweite Adressenwechselschaltung (20), die mit dem genannten Ausgangspufferspeicher (17) verbunden ist.

5. Schaltungsanordnung nach Anspruch 4, umfassend ferner eine Steuereinrichtung (7), die mit den genannten ersten und zweiten Adressenwechselschaltungen (8, 20) verbunden ist.

6. Schaltungsanordnung nach Anspruch 5, wobei der Steuereinrichtung (7) ein Videosignal-Synchronisationssignal zugeführt wird.

## Revendications

1. Circuit de détection de mouvement pour une image vidéo, le circuit comprenant :
une première mémoire tampon (2) pour mémoriser des données vidéo d'image en cours séparées en plusieurs premières données composantes représentatives de régions d'image en cours ;
une seconde mémoire tampon (3) pour mémoriser des données vidéo d'image précédente séparées en plusieurs secondes données composantes représentatives de régions d'image précédente ;
plusieurs moyens arithmétiques (9 à 12) pour obtenir des vecteurs mouvements, chacun desdits moyens arithmétiques (9 à 12) recevant les premières données composantes et les secondes données composantes correspondantes pour obtenir les vecteurs mouvements ;
un multiplexeur (16) raccordé aux sorties des moyens arithmétiques (9 à 12) ; et
une mémoire tampon (17) de sortie raccordée audit multiplexeur (16) ;
dans lequel ladite première mémoire tampon (2), ladite seconde mémoire tampon (3) et la mémoire tampon (17) de sortie sont chacune divisées en deux zones de mémoire (4, 5, 18, 19), les opérations d'écriture et de lecture de données pour les deux zones de mémoire étant commandées indépendamment l'une de l'autre.

2. Circuit selon la revendication 1, dans lequel chacun desdits moyens arithmétiques (9 à 12) comprend un moyen (13) de calcul de valeur différentielle absolue, un circuit (14) d'accumulation et un circuit (15) de détection de valeur minimale.

3. Circuit selon la revendication 1, dans lequel ladite première mémoire tampon (2) mémorise des données vidéo d'image en cours et ladite seconde mémoire tampon (3) mémorise des données vidéo retardées d'une image.

4. Circuit selon l'une quelconque des revendications précédentes, qui comprend en outre un premier circuit (8) de permutation d'adresses raccordé aux première et seconde mémoires tampons (2, 3), et un second circuit (20) de permutation d'adresses raccordé à la mémoire tampon (17) de sortie.

5. Circuit selon la revendication 4, qui comprend en outre un régisseur (7) raccordé auxdits premier et second circuits (8, 20) de permutation.

6. Circuit selon la revendication 5, dans lequel ledit régisseur (7) est alimenté avec un signal de synchronisation de signal vidéo.
